# EUROPEAN PATENT SPECIFICATION

(11) **EP 2 521 230 B1**
(45) Date of publication and mention of the grant of the patent: **09.07.2014**
(21) Application number: 11164928.1
(22) Date of filing: 05.05.2011
(51) Int. Cl.: H02G 3/08, H02G 15/007, H02G 15/013, H02G 15/113

(54) **Cable closure**
Kabelmuffe
Fermeture de câble

(43) Date of publication of application: 07.11.2012
(73) Proprietor: CCS Technology, Inc., Wilmington, DE 19803 (US)
(72) Inventor: Breuer-Heckel, Mike, Dipl.-Ing., 44143, Dortmund (DE); Badura, Stefan, Dipl.-Ing., 58708, Menden (DE); Kittler, Lars, Dipl.-Ing., 58239, Schwerte (DE)
(74) Representative: Sturm, Christoph

(56) References cited:
- EP-A2- 0 421 246
- WO-A1-94/09533
- WO-A1-97/02635
- WO-A1-97/27655
- DE-B1- 2 063 097
- DE-U- 6 915 116

## Description

The present patent application relates to an cable closure in accordance with the preamble of claim 1.

Cable closures are used in telecommunications cable networks for protecting spliced joints at connection points between two telecommunications cables and for protecting branch points or splitting points of telecommunications cables. In this case, the cable closures need to ensure the continuity of the telecommunications cables as though the telecommunications cables had not been interrupted.

The product catalog "Accessories for Fiber Optic Networks", Edition 1, page 75, Corning Cable Systems, 2001 discloses cable closures firstly in the form of inline cable closures and secondly in the form of dome cable closures, which all have a housing which defines an interior of the cable closure and seals off the interior thereof from the outside. Conventionally, assemblies for connecting, namely for splicing, telecommunications conductors guided in telecommunications cables are arranged in the interior defined by the housing of the cable closure.

In the case of cable closures in the form of dome cable closures, the housing is formed by a dome-like covering body and a sealing body, the sealing body defining cable insertion regions, which are sealed off on one side of the dome-like covering body and via which all of the cables can be inserted into the interior of the cable closure.

In the case of cable closures in the form of inline cable closures, cable insertion regions which are sealed off on two opposite sides of the covering body are formed for inserting cables into the interior of the cable closure, with the result that inline cable closures can be installed in one line with the cables.

DE 20 2010 006 582 U1 discloses an inline cable closure, having a housing, which delimits an interior of the cable closure and seals off the cable closure toward the outside, said housing comprising a covering body, said covering body comprises shells and provides on mutually opposite sides of the same cable insertion regions for inserting cables into said interior of the cable closure and/or for passing cables out of said interior of the cable closure. According to DE 20 2010 006 582 U1 compressible and/or deformable sealing elements are positioned at said mutually opposite sides of said covering body in the region of said cable insertion regions of said shells, wherein each of said sealing elements is positioned between barrier walls of the respective shell, namely between a barrier wall facing the interior of the cable closure and a barrier wall remote from the interior of the cable closure.

A cable closure according to the preamble of claim 1 is known from WO 97/27655 A1.

Against this background, the present patent application provides a novel cable closure having improved sealing properties.

This is accomplished by the feature that each barrier wall of said shells comprises a first segment being fixedly attached to the respective shell and at least one second segment being detachable from the first segment of the respective barrier wall.

The or each second segment of each barrier wall allows an easy and reliable adaption of the cable closure to different cable diameters of cables to be inserted into said interior of the cable closure and/or to be passed out of said interior of the cable closure thereby improving the sealing properties of the same.

Further on, in the region of each of said mutually opposite sides of a first one of said shells of said covering body the distance between the respective barrier wall facing the interior of the cable closure and the respective barrier wall remote from the interior of the cable closure is smaller than the respective distance between said barrier walls in the region of each of said mutually opposite sides of a second one of said shells of said covering body, namely in such a way that edges of the barrier walls of said first shell contact, namely compress and/or deform, the respective compressible and/or deformable sealing element positioned between of said barrier walls of the second shell when the said covering body of said housing is closed. This provides a further improvement of the sealing properties.

Exemplary embodiments of the invention will be explained in more detail, without any restriction being imposed, with reference to the drawing, in which:
- Figure 1: shows a perspective view of a preferred exemplary embodiment of a cable closure in form of an inline cable closure in a closed status of the same;
- Figure 2: shows a perspective view of the inline cable closure shown in figure 1 in an opened status of the same;

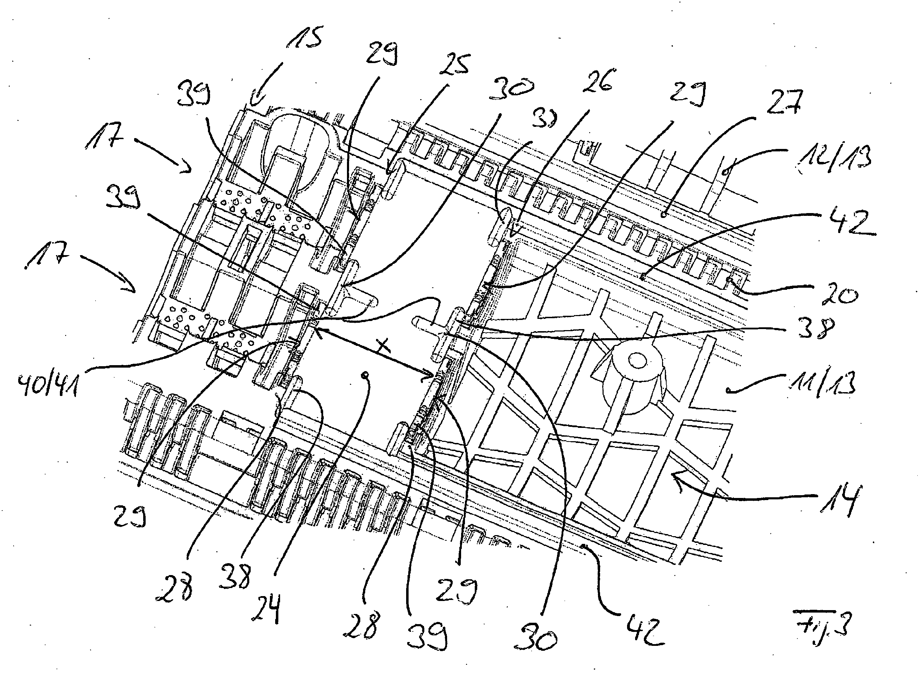

- Figure 3: shows a detail of a first, lower shell of the inline cable closure;

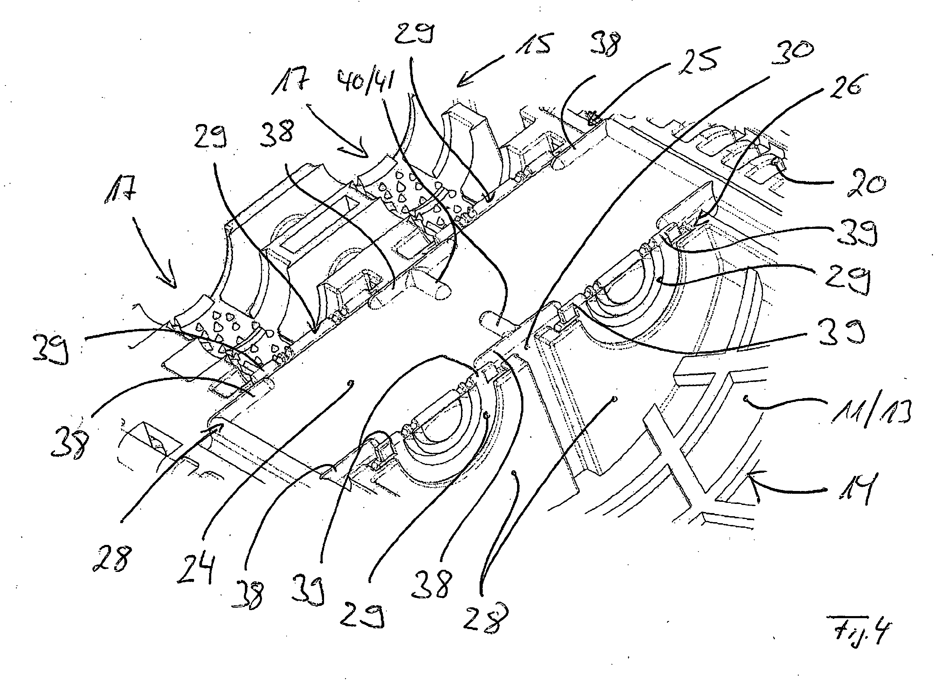

- Figure 4: shows another detail of the first, lower shell of the inline cable closure;
- Figure 5: shows the detail of figure 4 in a second status;
- Figure 6: shows a first perspective view of a detachable segment of a barrier wall; and
- Figure 7: shows a second perspective view of the detachable segment of figure 6.

The present invention relates to a cable closure 10, which in the preferred exemplary embodiment shown is an inline cable closure comprises a housing which is formed by a covering body 13 composed of two shells 11 and 12.

In the exemplary embodiment shown, the shells 11 and 12 are half-shells and the half-shell 11 is a so-called lower shell and the half-shell 12 is a so-called upper shell of the covering body 13, which together define an interior 14 of the inline cable closure 10.

Cable insertion regions 17 are formed on mutually opposite sides 15 and 16 of the inline cable closure 10 or the covering body 13, with it being possible for cables to be inserted into the interior 14 of the inline cable closure 10 or passed out of said interior. In the exemplary embodiment shown, in each case two cable insertion regions 17 for inserting in each case one cable into the interior 14 of the inline cable closure 10 are formed on both mutually opposite sides 15 and 16 of the covering body 13.

In the shown embodiment, the two half-shells 11 and 12 are hinged together at first longitudinal sides 18, 19 of the same. The half-shells 11 and 12 can be pivoted with respect to each other around a hinge 20 by which said two half-shells 11 and 12 are fixed to each other at said first longitudinal sides 18, 19 of the same. When the inline cable closure 10 is closed, the other second longitudinal sides 21, 22 of the two half-shells 11 and 12 can be secured to each other by a closing mechanism 23, which is in the shown embodiment assigned to the lower half-shell 11.

In order to ensure that the cables to be inserted into the interior 14 of the inline cable closure 10 via the cable insertion regions 17 are sealed off, compressible and/or deformable sealing elements 24, which are each arranged between barrier walls 25 and 26, are positioned in the region of both mutually opposite sides 15 and 16 of the covering body 13 of the inline cable closure 10 on which the cable insertion regions 17 are formed, both in the region of the lower half-shell 11 and in the region of the upper half-shell 12. A first barrier wall 25 is in each case, namely on both mutually opposite sides 15 and 16 in the region of the lower half-shell 11 and in the region of the upper half-shell 12, remote from the interior 14 of the inline cable closure 10 while a second barrier walls 26 is in each case facing the interior 14 of the cable closure 10.

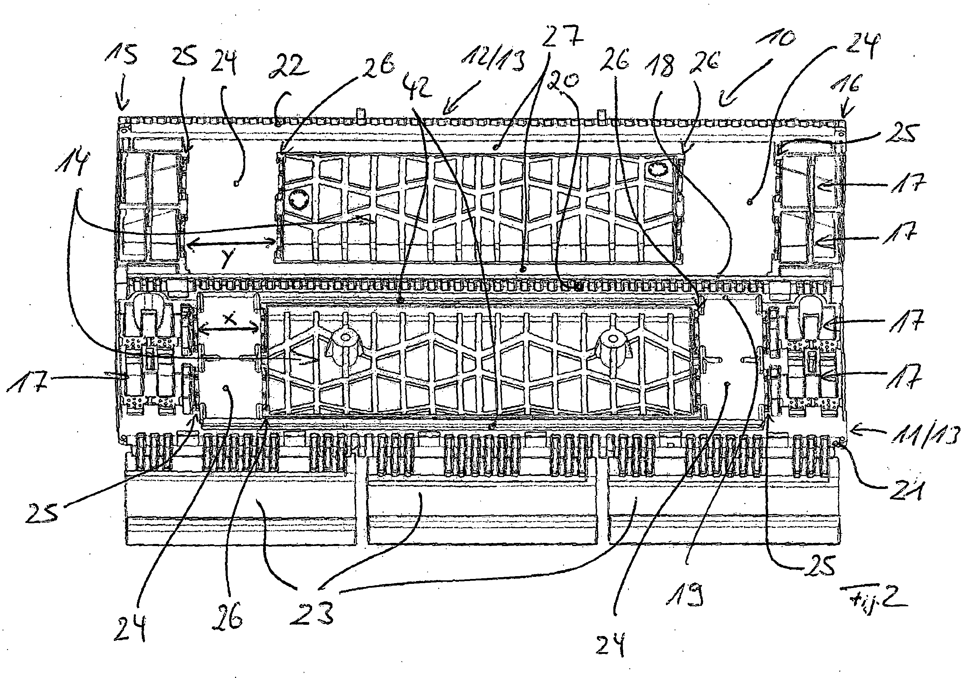

As shown in Figure 2, the compressible and/or deformable sealing elements 24 of the upper half-shell 12, which are associated with the cable insertion regions 17, are coupled via compressible and/or deformable sealing elements 27, which run parallel to longitudinal sides 18, 22 of the upper half-shell 12. As a result, an annular, closed sealing region is formed by the sealing elements 24 and 27 in the region of the upper half-shell 12. Possibly, an analogous sealing region can also be formed in the region of the lower half-shell 11.

The compressible and/or deformable sealing elements 24 and possibly 27 are preferably gel-like sealing elements, for example polyurethane gels or silicone gels. Such gel-like sealing elements are deformable and can be compressible.

It is also possible to use sealing elements 24 which are partially composed of different materials, for example from a deformable, gel-like sealing material and from a foam-like compressible sealing material.

Each of said barrier walls 25 and 26, namely both the barrier walls 25 remote from the interior 14 and the barrier walls 26 facing the interior 14, extends transversely with respect to an insertion direction of the cable insertion regions 17.

Each of said barrier walls 25 and 26 of said half-shells 11 and 12 comprises a first segment 28 being fixedly attached to the respective half-shell 11, 12 and at least one second segment 29 being detachable from the first segment 28 of the respective barrier wall 25, 26. In the shown embodiment, each of said barrier walls 25 and 26 comprises two second segments 29 being detachable from the first segment 28 of the respective barrier wall 25, 26.

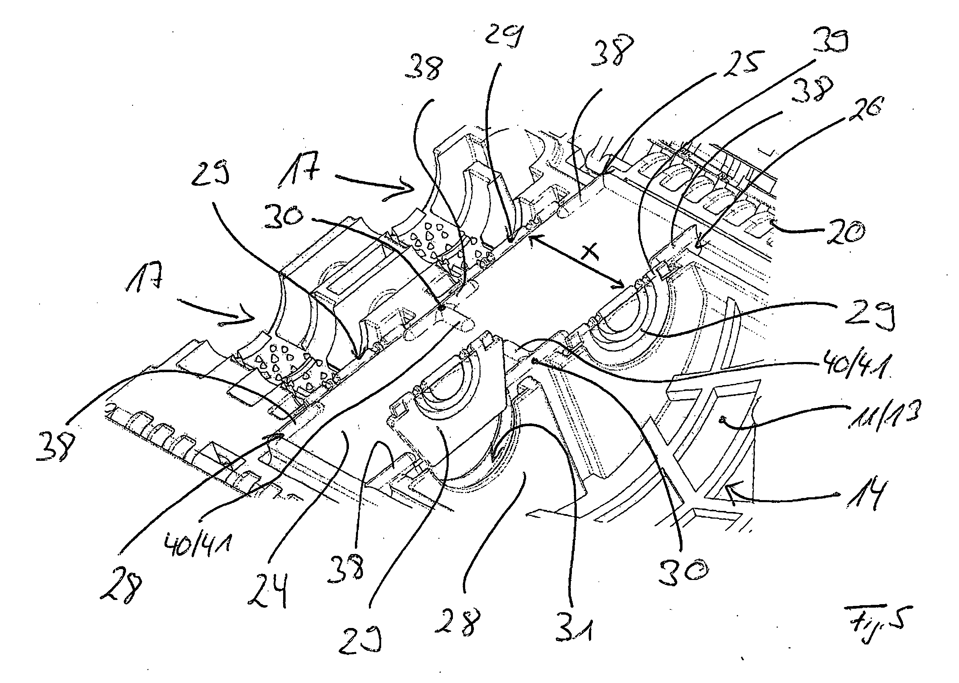

As shown in Figure 5, the first segment 28 of each barrier walls 25, 26 provides pocket-like openings 31 for receiving the respective second segments 29. The second segments 29 can easily be positioned within said pocket-like openings 31 and can easily be removed from the same.

The first segment 28 of each barrier wall 25, 26 of each of said half-shells 11, 12 extends transversely with respect to the insertion direction of the cable insertion regions 17. The second segments 29 being detachable from said first segment 28 of the respective barrier wall 25, 26 are positioned side by side separated by a middle section 30 of said first segment 28 of the respective barrier wall 25, 26. The second segments 29 of the barrier walls 25, 26 allows an easy and reliable adaption of the inline cable closure 10 to different cable diameters of cables to be handled by the inline cable closure 10 thereby improving the sealing properties of the same.

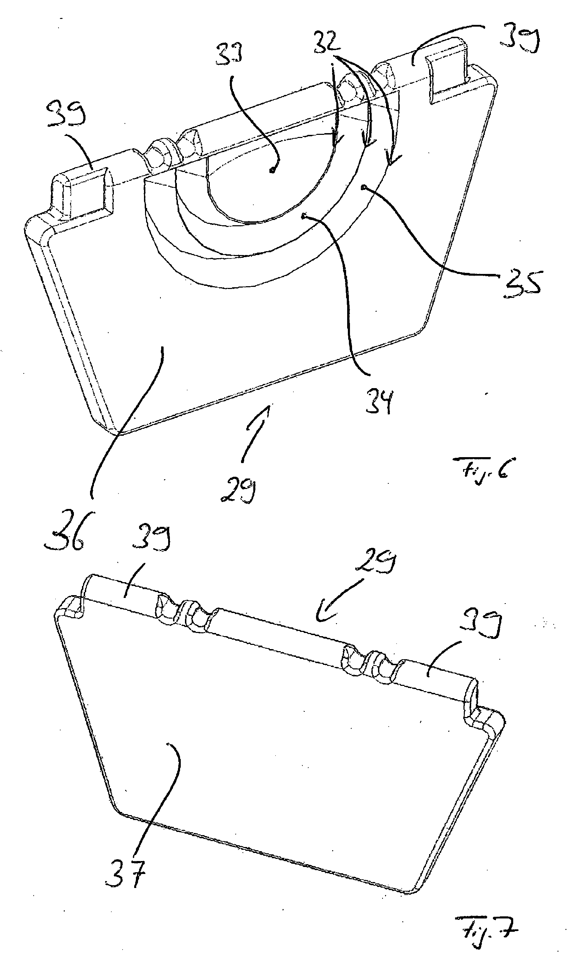

As can be best seen in Figure 6, each second segment 29 comprises at least one break-out section 33, 34, 35 for adapting the respective second segment 29 to a cable diameter of a cable which is be inserted into the interior of the cable closure and/or passed out of said interior of the cable closure. In the shown embodiment, each second segment 29 comprises three break-out sections 33, 34 and 35. These break-out sections 33, 34 and 35 are arranged concentrically to each other. By breaking out an inner break out section 33, the respective second segment 29 can be adapted to a cable having a relative small cable diameter. By breaking out one of the outer break out sections 34 and/or 35, the respective second segment 29 can be adapted to a cable having a larger cable diameter. By providing a second segment 29 having three concentrically arranged break out sections 33, 34 and 35, the same can be adapted to three different cable diameters.

The break out section 33, 34 and 35 can be broken out from the respective second segment 29 along predetermined breaking points 32 running between adjacent break out sections 33, 34, 35. These predetermined breaking points 32 are assigned to a front wall 36 of the respective second segment 29 and not to a back wall 37 of the same. If the respective second segment 29 is positioned inside one of said pocket-like opening 31 of the respective first segment 28 of the respective barrier wall 25 or 26, the back wall 37 of the respective second segment 29 faces into the direction of the sealing element 24 being positioned between two barrier walls 25 and 26.

As can be best seen in Figure 2, in the region of each of said mutually opposite sides 15, 16 of a first one of said half-shells 11, 12 of said covering body 13, namely in the region of the lower half-shells 11, the distance x between the respective barrier wall 26 facing the interior 14 of the cable closure and the respective barrier wall 25 remote from the interior 14 of the cable closure 10 is smaller than the respective distance y between said barrier walls 25, 26 in the region of each of said mutually opposite sides 15, 16 of a second one of said half-shells 11, 12 of said covering body 13, namely in the region of the upper half-shells 12.

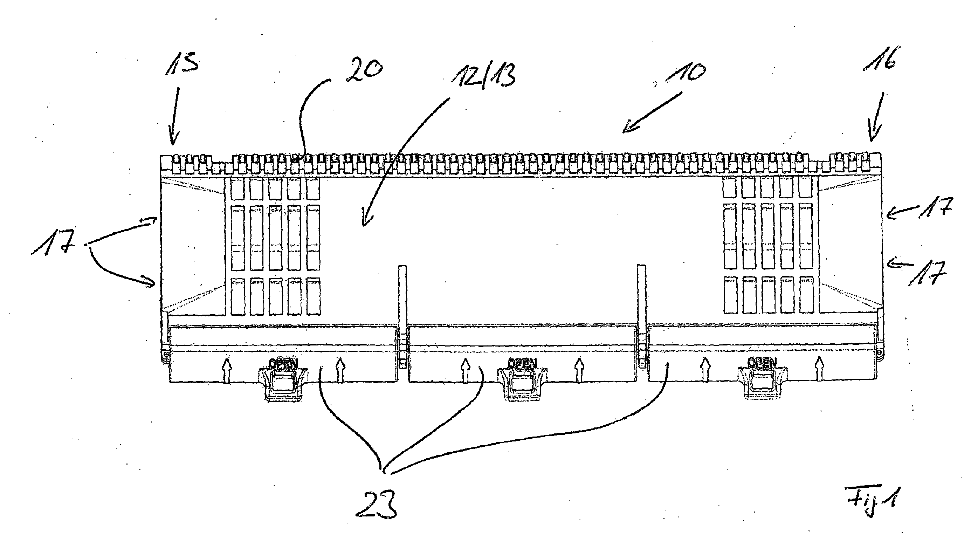

When the said covering body 13 of said housing is closed by bringing the half-shells 11 and 12 in the position shown in Figure 1, edges of the barrier walls 25 and 26 of said first, lower half-shell 11 extending transversely with respect to the insertion direction of the cable insertion regions 17 contact, namely compress and/or deform, the respective compressible and/or deformable sealing element 24 positioned between of said barrier walls 25, 26 of the second, upper half-shell 12.

In the shown embodiment, edges 38 of the first segment 18 of the respective barrier wall 25, 26 and edges 39 of the or each second segment 29 of the respective barrier wall 25, 26 of said first, lower half-shell 11 contact, namely compress and/or deform, the respective compressible and/or deformable sealing element 24 being positioned between said barrier walls 25, 26 of the second, upper half-shell 12 when the said covering body 13 of said housing is closed.

Thereby the compressible and/or deformable sealing element 24 becomes compressed and/or deformed so that the respective cable insertion region 17 is properly sealed even in the case that no cable is to be handled in the respective cable insertion region 17.

Said middle sections 30 of said first segments 28 of the barrier walls 25, 26 being positioned between second segments 29 of the respective barrier wall 25, 26 are T-shaped having protrusions 40 running in longitudinal direction with respect to the insertion direction of the cable insertion regions 17. Edges 41 of said protrusions 40 also contact, namely compress and/or deform, the respective compressible and/or deformable sealing element 24 positioned between of said barrier walls 25, 26 of the second, upper half-shell 12 when the cable closure is closed. This provides a further improvement of the sealing properties.

In addition, edges 42 of said lower half-shell 11 running in longitudinal direction contact, namely compress and/or deform, said compressible and/or deformable sealing element 27 running along longitudinal sides 18, 22 of the upper half-shell 12 and/or said compressible and/or deformable sealing elements 24 being positioned between said barrier walls 25, 26 of the upper half-shell 12 when the said covering body 13 of said housing is closed. This provides a further improvement of the sealing properties.

### List of reference numerals

- 10: inline cable closure
- 11: shell/lower half-shell
- 12: shell/upper half-shell
- 13: covering body
- 14: interior
- 15: side
- 16: side
- 17: cable insertion region
- 18: longitudinal side
- 19: longitudinal side
- 20: hinge
- 21: longitudinal side
- 22: longitudinal side
- 23: closing mechanism
- 24: sealing element
- 25: barrier wall
- 26: barrier wall
- 27: sealing element
- 28: first segment
- 29: second segment
- 30: middle section
- 31: pocket-like opening
- 32: predetermined breaking points
- 33: break out section
- 34: break out section
- 35: break out section
- 36: front wall
- 37: back wall
- 38: edge
- 39: edge
- 40: protrusions
- 41: edge
- 42: edge

## Claims

1. A cable closure, having a housing, which delimits an interior of the cable closure and seals off the cable closure toward the outside, said housing comprising a covering body (13), said covering body (13) comprises shells (11, 12) and provides on mutually opposite sides (15, 16) of the same cable insertion regions (17) for inserting cables into said interior of the cable closure and/or for passing cables out of said interior of the cable closure, wherein compressible and/or deformable sealing elements (24) are positioned at said mutually opposite sides (15, 16) of said covering body (13) in the region of said cable insertion regions (17) of said shells (11, 12), wherein each of said sealing elements (24) is positioned between barrier walls (25, 26) of the respective shell (11, 12), namely between a barrier wall (26) facing the interior (14) of the cable closure and a barrier wall (25) remote from the interior (14) of the cable closure, **characterized in that** each barrier wall (25, 26) of said shells (11, 12) comprises a first segment (28) being fixedly attached to the respective shell (11, 12) and at least one second segment (29) being detachable from the first segment (28) of the respective barrier wall (25, 26), and that
in the region of each of said mutually opposite sides (15, 16) of a first one of said shells (11) of said covering body (13) the distance (x) between the respective barrier wall (26) facing the interior (14) of the cable closure and the respective barrier wall (25) remote from the interior (14) of the cable closure is smaller than the respective distance (y) between said barrier walls (25, 26) in the region of each of said mutually opposite sides (15, 16) of a second one of said shells (12) of said covering body (13).

2. The cable closure as claimed in claim 1, **characterized in that** edges (38, 39) of the barrier walls (25, 26) of said first shell (11) extending transversely with respect to the insertion direction of the cable insertion regions (17) contact, namely compress and/or deform, the respective compressible and/or deformable sealing element (24) positioned between of said barrier walls (25, 26) of the second shell (12) when the said covering body (13) of said housing is closed.

3. The cable closure as claimed in claim 2, **characterized in that** edges (38) of the first segment (28) and/or edges (39) of the or each second segment (29) of said barrier walls (25, 26) of said first shell (11) contact, namely compress and/or deform, the respective compressible and/or deformable sealing element (24) positioned between of said barrier walls (25, 26) of the second shell (12) when the said covering body (13) of said housing is closed.

4. The cable closure as claimed in claim 2 or 3, **characterized in that** the compressible and/or deformable sealing elements (24) of said second shell (12) are coupled to one another via compressible and/or deformable sealing elements (27) which run along longitudinal sides of the second shell (12) so as to form an annular sealing region.

5. The cable closure as claimed in claim 4, **characterized in that** edges (42) of said first shell (11) running in longitudinal direction contact, namely compress and/or deform, said compressible and/or deformable sealing element (27) running along longitudinal sides of the second shell (12) and/or said compressible and/or deformable sealing elements (24) being positioned between said barrier walls (25, 26) of the second shell (12) when the said covering body (13) of said housing is closed.

6. The cable closure as claimed in one of claims 1 to 5, **characterized in that** said first segment (28) of each barrier wall (25, 26) of each of said shells (11, 12) extends transversely with respect to the insertion direction of the cable insertion regions (17), and that at least two second segments (29) being both detachable from said first segment (28) of the respective barrier wall (25, 26) are positioned side by side separated by middle sections (30) of said first segment (28) of the respective barrier wall (25, 26).

7. The cable closure as claimed in claim 6, **characterized in that** said middle section (30) of said first segment (28) being positioned between second segments (29) of the respective barrier wall is T-shaped having a protrusion (40) running in longitudinal direction with respect to the insertion direction of the cable insertion regions (17).

8. The cable closure as claimed in one of claims 1 to 7, **characterized in that** the second segment (29) of each barrier wall (25, 26) being detachable from the first segment (28) of the respective side barrier wall (25, 26) comprises at least one break-out section (33, 34, 35) for adapting the respective second segment (29) to a cable diameter of a cable which is to be inserted into the interior of the cable closure and/or passed out of said interior of the cable closure.

9. The cable closure as claimed in claim 8, **characterized in that** said second segment (29) of each barrier wall (25, 26) comprises at least two break-out sections for adapting the respective second segment (29) to a cable diameter of a cable, whereby said break out sections of the second segment (29) of each barrier wall (25, 26) are arranged to each other concentrically so that an inner break out section (33) adapts the respective second segment (29) to relative small cable diameter and that the or each outer break out section (34, 35) adapts the respective second segment to a larger cable diameter.

10. The cable closure as claimed in one of claims 1 to 9, **characterized in that** the compressible and/or deformable sealing elements (24) are gel-like sealing elements.

## Patentansprüche

1. Kabelmuffe mit einem Gehäuse, das einen Innenraum der Kabelmuffe begrenzt und die Kabelmuffe nach außen hin abdichtet,
wobei das Gehäuse einen Abdeckkörper (13) umfasst, wobei der Abdeckkörper (13) Schalen (11, 12) umfasst und einander gegenüberliegende Seiten (15, 16) der gleichen Kabeleinführbereiche (17) zum Einführen von Kabeln in den Innenraum der Kabelmuffe und/oder zum Herausführen von Kabeln aus dem Innenraum der Kabelmuffe bereitstellt,
wobei komprimierbare und/oder verformbare Dichtungselemente (24) an den einander gegenüberliegenden Seiten (15, 16) des Abdeckkörpers (13) in dem Bereich der Kabeleinführbereiche (17) der Schalen (11, 12) angeordnet sind,
wobei jedes der Dichtungselemente (24) zwischen Begrenzungswänden (25, 26) der entsprechenden Schale (11, 12) angeordnet ist, nämlich zwischen einer Begrenzungswand (26), die zu dem Innenraum (14) der Kabelmuffe zeigt, und einer Begrenzungswand (25), die entfernt von dem Innenraum (14) der Kabelmuffe angeordnet ist,
**dadurch gekennzeichnet, dass** jede Begrenzungswand (25, 26) der Schalen (11, 12) ein erstes Segment (28) umfasst, das fest an der jeweiligen Schale (11, 12) angebracht ist, und dass mindestens ein zweites Segment (29) von dem ersten Segment (28) der entsprechenden Begrenzungswand (25, 26) lösbar ist,
und dadurch, dass in dem Bereich jeder der einander gegenüberliegenden Seiten (15, 16) einer ersten der Schalen (11) des Abdeckkörpers (13) der Abstand (x) zwischen der entsprechenden Begrenzungswand (26), die zu dem Innenraum (14) der Kabelmuffe zeigt, und der entsprechenden Begrenzungswand (25), die entfernt von dem Innenraum (14) der Kabelmuffe angeordnet ist, kleiner als der entsprechende Abstand (y) zwischen den Begrenzungswänden (25, 26) in dem Bereich jeder der einander gegenüberliegenden Seiten (15, 16) einer zweiten der Schalen (12) des Abdeckkörpers (13) ist.

2. Kabelmuffe nach Anspruch 1, **dadurch gekennzeichnet, dass** die Ränder (38, 39) der Begrenzungswände (25, 26) der ersten Schale (11), die sich quer in Bezug auf die Einführrichtung der Kabeleinführbereiche (17) erstreckt, mit dem komprimierbaren und/oder verformbaren Dichtungselement (24), das zwischen den Begrenzungswänden (25, 26) der zweiten Schale (12) angeordnet ist, in Kontakt tritt, nämlich dieses zusammendrückt und/oder verformt, wenn der Abdeckkörper (13) des Gehäuses geschlossen ist.

3. Kabelmuffe nach Anspruch 2, **dadurch gekennzeichnet, dass** die Ränder (38) des ersten Segments (28) und/oder die Ränder (39) des oder jedes zweiten Segments (29) der Begrenzungswände (25, 26) der ersten Schale (11) mit dem komprimierbaren und/oder verformbaren Dichtungselement (24), das zwischen den Begrenzungswänden (25, 26) der zweiten Schale (12) angeordnet ist, in Kontakt treten, d. h. dieses zusammendrücken und/oder verformen, wenn der Abdeckkörper (13) des Gehäuses geschlossen ist.

4. Kabelmuffe nach Anspruch 2 oder 3, **dadurch gekennzeichnet, dass** die komprimierbaren und/oder verformbaren Dichtungselemente (24) der zweiten Schale (12) miteinander über komprimierbare und/oder verformbare Dichtungselemente (27) gekoppelt sind, die entlang Längsseiten der zweiten Schale (12) verlaufen, um einen ringförmigen Dichtungsbereich zu bilden.

5. Kabelmuffe nach Anspruch 4, **dadurch gekennzeichnet, dass** die Ränder (42) der ersten Schale (11), die in Längsrichtung verlaufen, mit dem komprimierbaren und/oder verformbaren Dichtungselement (27), das entlang Längsseiten der zweiten Schale (12) verläuft, in Kontakt treten, d. h. dieses zusammendrücken und/oder verformen, und/oder dadurch, dass die komprimierbaren und/oder verformbaren Dichtungselemente (24) zwischen den Begrenzungswänden (25, 26) der zweiten Schale (12) angeordnet sind, wenn der Abdeckkörper (13) des Gehäuses geschlossen ist.

6. Kabelmuffe nach einem der Ansprüche 1 bis 5, **dadurch gekennzeichnet, dass** sich das erste Segment (28) jeder Begrenzungswand (25, 26) jeder der Schalen (11, 12) quer in Bezug auf die Einführrichtung der Kabeleinführbereiche (17) erstreckt, und dadurch, dass mindestens zwei zweite Segmente (29), die beide von dem ersten Segment (28) der entsprechenden Begrenzungswand (25, 26) lösbar sind, nebeneinander angeordnet und durch Mittenabschnitte (30) des ersten Segments (28) der entsprechenden Begrenzungswand (25, 26) getrennt sind.

7. Kabelmuffe nach Anspruch 6, **dadurch gekennzeichnet, dass** der Mittenabschnitt (30) des ersten Segments (28), das zwischen zweiten Segmenten (29) der entsprechenden Begrenzungswand angeordnet ist, T-förmig ist und einen Vorsprung (40) aufweist, der in Längsrichtung in Bezug auf die Einführrichtung der Kabeleinführbereiche (17) verläuft.

8. Kabelmuffe nach einem der Ansprüche 1 bis 7, **dadurch gekennzeichnet, dass** das zweite Segment (29) jeder Begrenzungswand (25, 26), das von dem ersten Segment (28) der entsprechenden Begrenzungswand (25, 26) lösbar ist, mindestens einen Bruchabschnitt (33, 34, 35) zum Anpassen des jeweiligen zweiten Segments (29) an einen Kabeldurchmesser eines Kabels, das in den Innenraum der Kabelmuffe eingeführt und/oder das aus dem Innenraum der Kabelmuffe hinausgeführt werden soll, umfasst.

9. Kabelmuffe nach Anspruch 8, **dadurch gekennzeichnet, dass** das zweite Segment (29) jeder Begrenzungswand (25, 26) mindestens zwei Bruchabschnitte zum Anpassen des entsprechenden zweiten Segments (29) an einen Kabeldurchmesser eines Kabels umfasst, wobei die Bruchabschnitte des zweiten Segments (29) jeder Begrenzungswand (25, 26) konzentrisch zueinander angeordnet sind, sodass ein innerer Bruchabschnitt (33) das entsprechende zweite Segment (29) an einen relativ kleinen Kabeldurchmesser anpasst, und dadurch, dass der oder jeder äußere Bruchabschnitt (34, 35) das jeweilige zweite Segment an einen größeren Kabeldurchmesser anpasst.

10. Kabelmuffe nach einem der Ansprüche 1 bis 9, **dadurch gekennzeichnet, dass** die komprimierbaren und/oder verformbaren Dichtungselemente (24) gelartige Dichtungselemente sind.

## Revendications

1. Fermeture de câble présentant un boîtier qui délimite un intérieur de la fermeture de câble et qui sépare de manière hermétique la fermeture de câble vis-à-vis de l'extérieur, ledit boîtier comprenant un corps de recouvrement (13), ledit corps de recouvrement (13) comprenant des coques (11, 12) et fournissant des régions d'insertion de câble (17) sur des côtés mutuellement opposés (15, 16) desdites coques en vue de l'insertion de câbles dans ledit intérieur de la fermeture de câble et/ou en vue de faire ressortir des câbles hors dudit intérieur de la fermeture de câble, des éléments de fermeture hermétique (24) compressibles et/ou déformables étant positionnés au niveau desdits côtés mutuellement opposés (15, 16) dudit corps de recouvrement (13) dans la région desdites régions d'insertion de câble (17) desdites coques (11, 12), chacun desdits éléments de fermeture hermétique (24) étant positionné entre des parois formant barrière (25, 26) de la coque respective (11, 12), à savoir entre une paroi formant barrière (26) en regard de l'intérieur (14) de la fermeture de câble et une paroi formant barrière (25) éloignée de l'intérieur (14) de la fermeture de câble, **caractérisée en ce que** chaque paroi formant barrière (25, 26) desdites coques (11, 12) comprend un premier segment (28) attaché fixement à la coque respective (11, 12) et au moins un deuxième segment (29) pouvant être détaché du premier segment (28) de la paroi formant barrière respective (25, 26), et **en ce que**, dans la région de chacun desdits côtés mutuellement opposés (15, 16) d'une première desdites coques (11) dudit corps de recouvrement (13), la distance (x) entre la paroi formant barrière respective (26) en regard de l'intérieur (14) de la fermeture de câble et la paroi formant barrière respective (25) éloignée de l'intérieur (14) de la fermeture de câble est inférieure à la distance respective (y) entre lesdites parois formant barrière (25, 26) dans la région de chacun desdits côtés mutuellement opposés (15, 16) d'une deuxième desdites coques (12) dudit corps de recouvrement (13).

2. Fermeture de câble selon la revendication 1, **caractérisée en ce que** des bords (38, 39) des parois formant barrière (25, 26) de ladite première coque (11) s'étendant transversalement par rapport à la direction d'insertion des régions d'insertion de câble (17) viennent en contact avec, à savoir compriment et/ou déforment, l'élément de fermeture hermétique compressible et/ou déformable respectif (24) positionné entre lesdites parois formant barrière (25, 26) de la deuxième coque (12) lorsque ledit corps de recouvrement (13) dudit boîtier est fermé.

3. Fermeture de câble selon la revendication 2, **caractérisée en ce que** des bords (38) du premier segment (18) et/ou des bords (39) du ou de chaque deuxième segment (19) desdites parois formant barrière (25, 26) de ladite première coque (11), viennent en contact avec, à savoir compriment et/ou déforment, l'élément de fermeture hermétique compressible et/ou déformable respectif (24) positionné entre lesdites parois formant barrière (25, 26) de la deuxième coque (12) lorsque ledit corps de recouvrement (13) dudit boîtier est fermé.

4. Fermeture de câble selon la revendication 2 ou 3, **caractérisée en ce que** les éléments de fermeture hermétique compressibles et/ou déformables (24) de ladite deuxième coque (12) sont accouplés l'un à l'autre par le biais d'éléments de fermeture hermétique compressibles et/ou déformables (27) qui s'étendent le long de côtés longitudinaux de la deuxième coque (12) de manière à former une région de fermeture hermétique annulaire.

5. Fermeture de câble selon la revendication 4, **caractérisée en ce que** des bords (42) de ladite première coque (11) s'étendant dans la direction longitudinale viennent en contact avec, à savoir compriment et/ou déforment, ledit élément de fermeture hermétique compressible et/ou déformable (27) s'étendant le long de côtés longitudinaux de la deuxième coque (12) et/ou lesdits éléments de fermeture hermétique compressibles et/ou déformables (24) étant positionnés entre lesdites parois formant barrière (25, 26) de la deuxième coque (12) lorsque ledit corps de recouvrement (13) dudit boîtier est fermé.

6. Fermeture de câble selon l'une quelconque des revendications 1 à 5, **caractérisée en ce que** ledit premier segment (28) de chaque paroi formant barrière (25, 26) de chacune desdites coques (11, 12) s'étend transversalement par rapport à la direction d'insertion des régions d'insertion de câble (17), et **en ce qu'**au moins deux deuxièmes segments (29) étant tous les deux détachables dudit premier segment (28) de la paroi formant barrière respective (25, 26) sont positionnés côte à côte en étant séparés par des sections centrales (30) dudit premier segment (28) de la paroi formant barrière respective (25, 26).

7. Fermeture de câble selon la revendication 6, **caractérisée en ce que** ladite section centrale (30) dudit premier segment (28) étant positionné entre des deuxièmes segments (29) de la paroi formant barrière respective a une forme en T ayant une saillie (40) s'étendant dans la direction longitudinale par rapport à la direction d'insertion des régions d'insertion de câble (17).

8. Fermeture de câble selon l'une quelconque des revendications 1 à 7, **caractérisée en ce que** le deuxième segment (29) de chaque paroi formant barrière (25, 26) étant détachable du premier segment (28) de la paroi formant barrière latérale respective (25, 26) comprend au moins une section de rupture (33, 34, 35) destinée à adapter le deuxième segment respectif (29) à un diamètre de câble d'un câble devant être inséré à l'intérieur de la fermeture de câble et/ou devant être ressorti hors dudit intérieur de la fermeture de câble.

9. Fermeture de câble selon la revendication 8, **caractérisée en ce que** ledit deuxième segment (29) de chaque paroi formant barrière (25, 26) comprend au moins deux sections de rupture destinées à adapter le deuxième segment respectif (29) à un diamètre de câble d'un câble, lesdites sections de rupture du deuxième segment (29) de chaque paroi formant barrière (25, 26) étant agencées concentriquement l'une par rapport à l'autre de telle sorte qu'une section de rupture interne (33) adapte le deuxième segment respectif (29) à un diamètre de câble relativement petit et que la ou chaque section de rupture externe (34, 35) adapte le deuxième segment respectif à un diamètre de câble plus grand.

10. Fermeture de câble selon l'une quelconque des revendications 1 à 9, **caractérisée en ce que** les éléments de fermeture hermétique compressibles et/ou déformables (24) sont des éléments de fermeture hermétique de type gel.
